# EUROPÄISCHE PATENTANMELDUNG

(11) **EP 0 759 451 A2**
(43) Veröffentlichungstag der Anmeldung: **26.02.1997**
(21) Anmeldenummer: 96112664.6
(22) Anmeldetag: 06.08.1996
(51) Int. Cl.: C08G 63/02, C08G 64/00, C08G 69/02, C08G 71/00, C08F 2/44

(54) **Polymere Fluoreszenzmarker**

(30) Priorität: 18.08.1995 DE 19530449
(71) Anmelder: BAYER AG, 51368 Leverkusen (DE)
(72) Erfinder: Meier, Helmut-Martin, Dr., 40883 Ratingen (DE); Seng, Florin, Dr., 51467 Bergisch Gladbach (DE); Becker, Arno, Dr., 47803 Krefeld (DE); Kuckert, Eberhard, Dr., 51375 Leverkusen (DE); Böcker, Thomas Dr., 42799 Leichlingen (DE); Luttermann, Klaus Dr., 53819 Neunkirchen-Seelscheid (DE)

(57) **Zusammenfassung**

Durch Polykondensation oder Polyaddition erhältliche Polymere, die als ein Comonomer eine im sichtbaren Spektralbereich bei Wellenlängen von 400 bis 660 nm fluoreszierende Verbindung enthalten.

## Beschreibung

Die Erfindung betrifft durch Polykondensation oder Polyaddition gebildete Polymere, enthaltend als ein Comonomer mindestens eine im sichtbaren Spektralbereich fluoreszierende Verbindung, die nachfolgend als Fluoreszenzmarker bezeichnet werden, ein Verfahren zu deren Herstellung sowie ihre Verwendung zum Markieren von Kunststoffen sowie ein Verfahren zum Trennen so markierter Kunststoffe.

Für das Recycling von Kunststoffabfällen ist es wünschenswert, diese möglichst sortenrein trennen zu können, denn nur reine Stoffe sind sinnvoll wiederverwendungsfähig. Es ist bereits bekannt, Kunststoffe mit fluoreszierenden Farbstoffen zu markieren und sie mit einem entsprechenden Detektorsystem zu identifizieren und nach Sorten zu trennen. Bei der Verwendung von unterschiedlichen Fluoreszenzfarbstoffen bzw. -kombinationen können die verschiedensten Kunststoffe eindeutig markiert werden und aufgrund ihrer unterschiedlichen Fluoreszenzsignale voneinander getrennt werden.

So ist beispielsweise aus EP-A-476 416 bekannt, Kunststoffe mit monomeren Fluoreszenzfarbstoffen zu markieren. Diese weisen jedoch im Hinblick auf ihre Sublimationsechtheit und Thermomigrierechtheit noch gewisse Nachteile auf.

In WO 93/09172 werden fluoreszierende Verbindungen vorzugsweise als kettenverlängernde Comonomere zur Herstellung von Polykondensaten verwendet und zum Markieren von Thermoplasten eingesetzt, wobei die fluoreszierenden Verbindungen im nahen IR-Bereich fluoreszieren.

Es wurden nun durch Polykondensation oder Polyaddition erhältliche Polymere gefunden, die als ein Comonomer eine im sichtbaren Spektralbereich bei Wellenlängen von 400 bis 660 nm fluoreszierende Verbindung enthalten .

Als mögliche fluoreszierende Verbindungen kommen solche in Frage, die eine (monofunktionell) oder mehrere (polyfunktionell) zur (Poly)kondensation oder (Poly)addition fähige gleiche oder unterschiedliche funktionelle Gruppe(n) enthalten. Dabei fungieren die monofunktionellen fluoreszierenden Verbindungen dieser Alt als Kettenabbrecher. Bifunktionelle fluoreszierende Verbindungen fungieren im allgemeinen als Kettenverlängerer und tri- und höherfunktionelle fluoreszierende Verbindungen als Vernetzer. Polyfunktionelle fluoreszierende Verbindungen, die unterschiedliche funktionelle Gruppen tragen, können auch als Kettenabbrecher fungieren, insbesondere dann, wenn die funktionellen Gruppen, die sie tragen, unterschiedlich reaktiv sind. Vorzugsweise werden unter den fluoreszierenden Verbindungen fluoreszierende Farbstoffe verstanden. Die fluoreszierenden Farbstoffe entsprechen bevorzugt der Formel (I)

Fb-(X)ₙ (I),

worin
- Fb: ein fluoreszierender Farbstoffrest bedeutet,
- X: ein zur Kondensation oder Addition fähiger funktioneller Rest bedeutet, ausgewählt aus der Gruppe: -NH₂, -NHR₁, -NCO, -COCl, -COOH, -OH, -OCOR², -OCO₂R², -OCONNHR² oder CO₂R², worin R¹ und R² unabhängig voneinander gegebenenfalls substituiertes C₁-C₈-Alkyl, C₄-C₈-Cycloalkyl oder C₆-C₁₀-Alyl bedeuten, insbesondere unsubstituiertes Alkyl oder Phenyl, besonders bevorzugt C₁-C₄-Alkyl, wie Methyl oder Ethyl bedeuten und
- n: für eine Zahl von 1 bis 6 steht, wobei X gleich oder verschieden sein kann, wenn n größer als 1 ist und
das Emissionsmaximum des fluoreszierenden Farbstoffs der Formel (I) bei 400 bis 660 nm, vorzugsweise bei 400 bis 550 nm liegt.

Bevorzugte Farbstoffe der Formel (I) sind solche, bei denen n für 1 oder 2, insbesondere für 1 steht und X gegebenenfalls gleich oder unterschiedlich für - OH oder -NH₂ steht. Als Rest Fb der Formel (I) kommen prinzipiell alle organischen Fluoreszenzfarbstoffreste in Frage, vorzugsweise solche die wasserunlöslich sind. Unter wasserunlöslich wird im Rahmen dieser Anmeldung verstanden kleiner 0,5, vorzugsweise kleiner 0,1 g/l. Bevorzugt sind solche, ausgewählt aus der Gruppe der Cumarine, Benzofurane, Perylene, Benzanthrone, Anthrapyrimidine und Anthrapyridone geeignet.

Bevorzugt sind die Cumarin- bzw. Benzofurantypen.

Als funktionelle Gruppen X haben sich Amino- und Hydroxygruppen als besonders geeignet erwiesen. Die Einführung - falls noch nicht vorhanden - einer Aminogruppe in das fluoreszierende Farbstoffsystem kann beispielsweise durch Reduktion von Nitro- bzw. Cyanogruppen erfolgen. Ein Hydroxyrest kann beispielsweise durch Ethoxylierung einer Amino- oder Hydroxygruppe eingeführt werden. Besonders bevorzugte fluoreszierende Farbstoffe sind Cumarinfarbstoffe insbesondere solche der Formel (II) 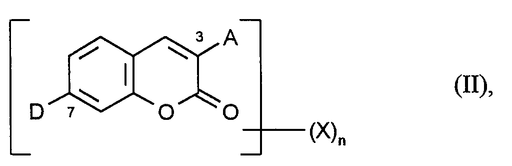 worin
- X und n: die obige Bedeutung besitzen und
- A und D: die nachfolgenden Bedeutungen haben. Vorzugsweise sind die Reste A und/oder D mit 1 bis 6, vorzugsweise 1 bis 2 gleichen oder unterschiedlichen funktionellen Gruppen X substituiert.

In einer bevorzugten Ausführungsform steht
- A: für einen gegebenenfalls durch X substituierten aromatischen Rest, insbesondere C₆-C₁₀-Aryl-Rest, oder heterocyclischen Rest, wobei X vorzugsweise für NH₂, CH₂NH₂, CH₂CH₂OH oder OH steht.
- D: bedeutet vorzugsweise Dialkylamino, insbesondere C₁-C₄-Dialkylamino, einen N-substituierten Heterocyclus, Alkoxy, insbesondere C₁-C₄-Alkoxy, das gegebenenfalls durch X substituiert wobei X vorzugsweise für NH₂, CH₂NH₂, CH₂CH₂OH oder OH steht.

Bevorzugte Verbindungen der Formel (II) sind solche, worin A = 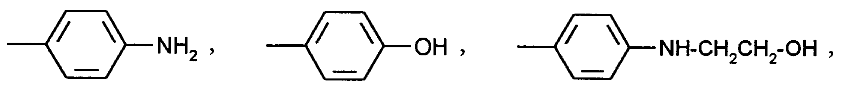 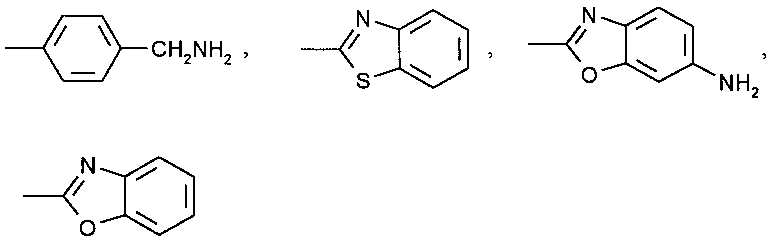 und D =
-N(C₂H₅)₂, -N(CH₃)₂, 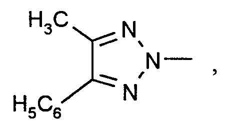 CH₃O-, HOCH₂CH₂-O- bedeuten.

Verbindungen der Formel (II) können nach an sich bekannten Verfahrensschritten hergestellt werden.

Ebenfalls bevorzugte fluoreszierende Farbstoffe sind Benzofurane, die der Formel (III) entsprechen 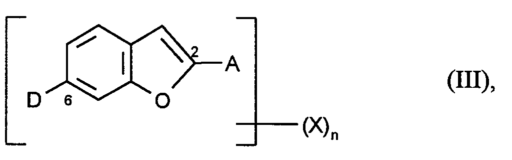 worin
- X, A, D und n: die obige Bedeutung besitzen.

Besonders bevorzugte fluoreszierende Farbstoffe sind beispielsweise solche der nachstehenden Formeln: (1) - (19)

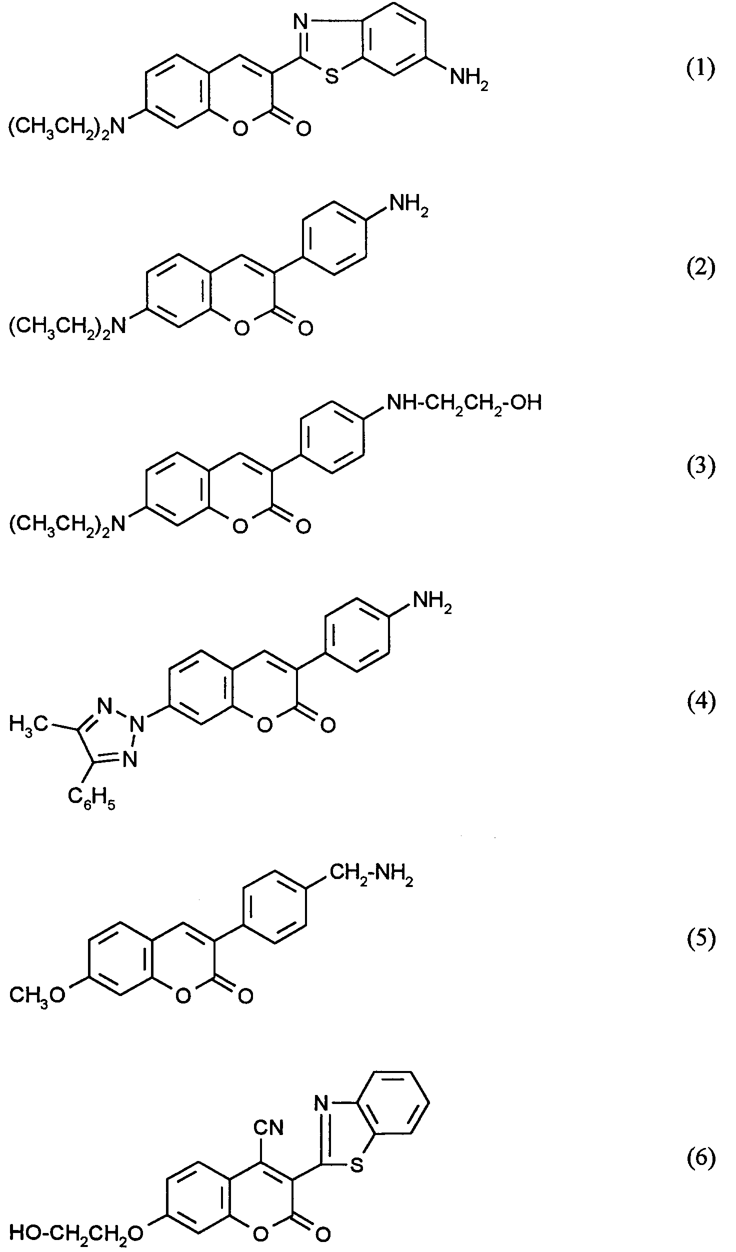

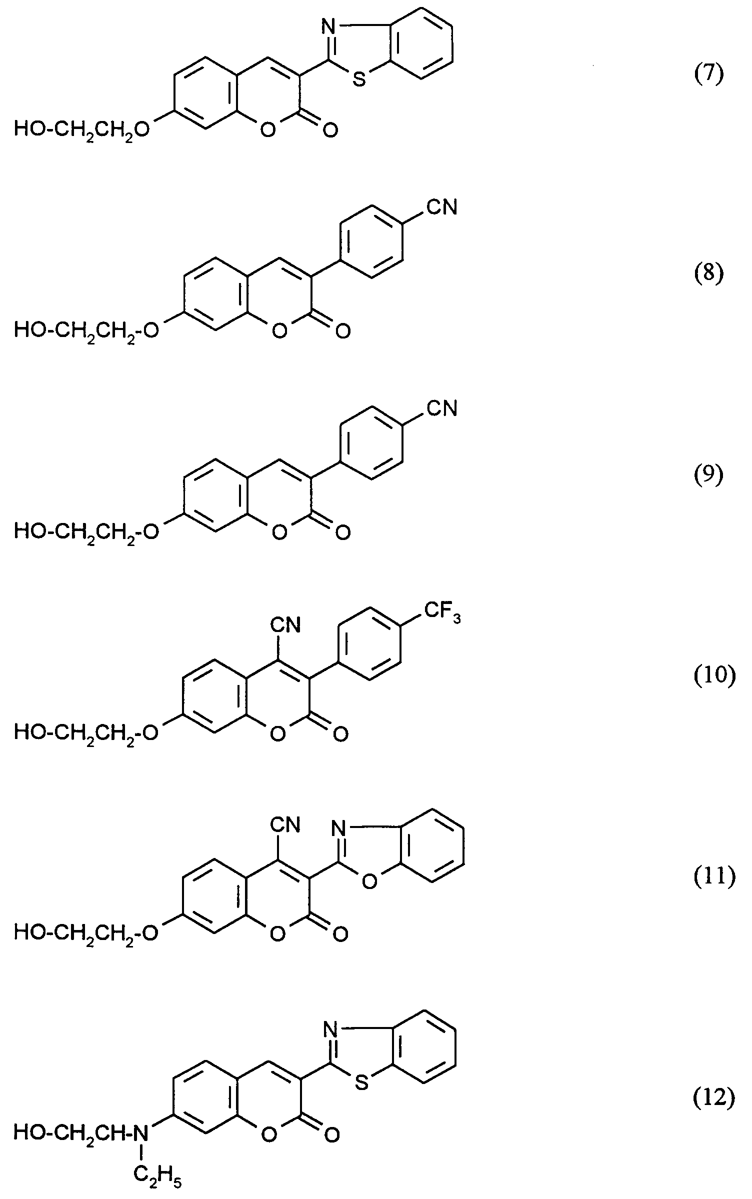

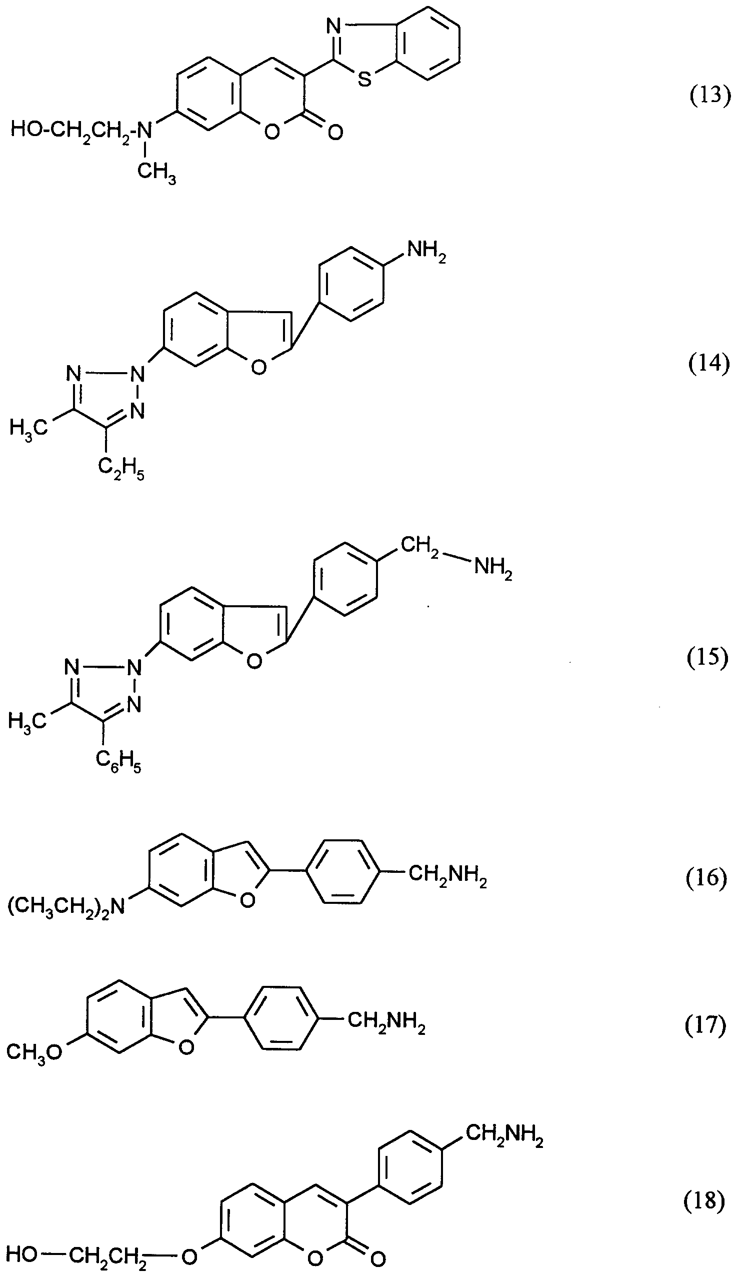

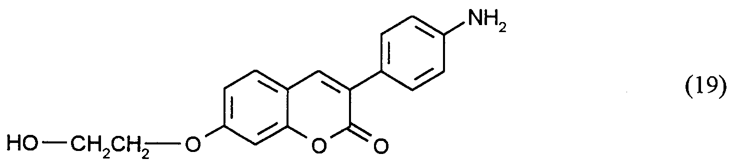

### Polymere

Bevorzugte erfindungsgemäße, durch Polyaddition erhältliche Polymere sind beispielsweise Polyurethane.

Bevorzugte durch Polykondensation erhältliche Polymere sind Polyamide, Polyester und Polycarbonate. Besonders bevorzugt besitzen sie ein als Zahlenmittel bestimmtes mittleres Molgewicht von Mₙ 500 bis 5000 g/mol. Die erfindungsgemäßen Polymere sind im Mittel vorzugsweise aus 3 bis 100 Monomereinheiten aufgebaut; d.h. sie sind vorzugsweise oligomer.

Der molare Anteil der fluoreszierenden Verbindung an der Gesamtmenge der Comonomeren beträgt im allgemeinen 0,5 bis 33 %, insbesondere 0,5 bis 15 Mol-%. Für monofunktionelle fluoreszierende Verbindungen, insbesondere fluoreszierende Farbstoffe, beträgt dieser Anteil vorzugsweise 1 bis 5 Mol-%, für bifunktionelle fluoreszierende Verbindungen vorzugsweise 3 bis 6 Mol-% und für tri- und höherfunktionelle fluoreszierende Verbindungen von 5 bis 10 Mol-%.

Die fluoreszierenden Verbindungen können auch als Mischungen unterschiedlicher mono- und/oder polyfunktionellen Verbindungen eingesetzt werden.

Die Anregungswellenlange für die fluoreszierenden Verbindungen liegt vorzugsweise im UV-Spektralbereich.

Zur Herstellung der erfindungsgemäßen Polymeren setzt man die fluoreszierenden Verbindungen insbesondere den fluoreszierenden Farbstoff als ein Comonomer zusammen mit den anderen Comonomeren in an sich bekannter Weise um.

So wird beispielsweise das Polymer aus der Gruppe der Polyamide vorzugsweise durch Reaktion eines Diamins mit einem Disäurechlorid oder einer Dicarbonsäure in Gegenwart der fluoreszierenden Verbindung hergestellt, wobei die fluoreszierende Verbindung, insbesondere der fluoreszierend Farbstoff, sofern sie zwei bzw. mehrere Aminogruppen oder zwei bzw. mehrere Säure- bzw. Säurechloridgruppen trägt als kettenverlängerndes Monomer bzw. als Vernetzer fungiert oder sofern sie nur eine Amino- oder eine Säure- bzw. Säurechloridgruppe trägt als Kettenabbrecher ins Polymer eingebaut wird.

Bevorzugte Diaminoverbindungen sind solche der Formel (IV)

HRN-B-NHR (IV)

worin B einen bivalenten aliphatischen, aromatischen, aromatisch-aliphatischen, acyclischen oder isocyclischen Rest, insbesondere einen Rest der Formel (CH₂)ₙ, mit n = 1 bis 12, 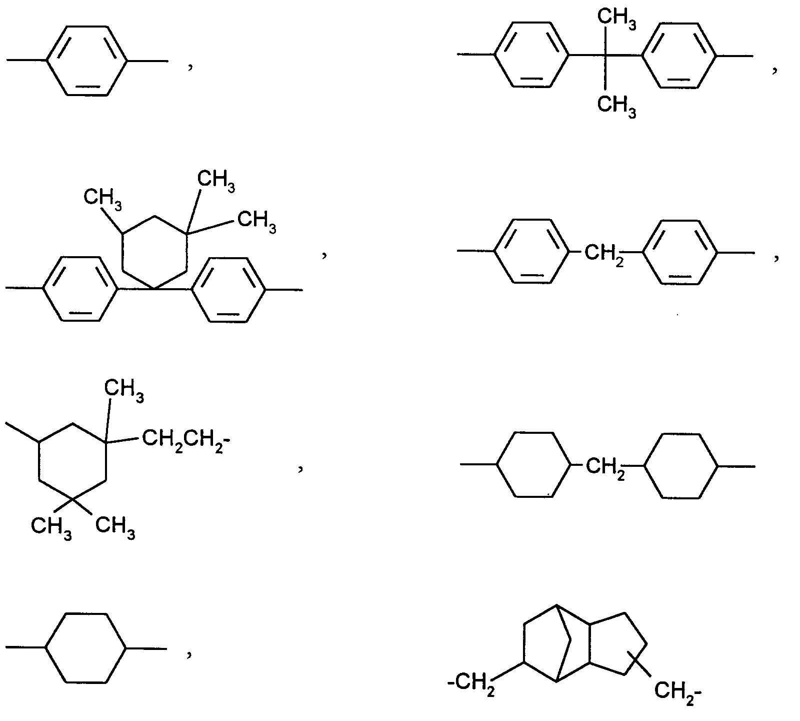 bedeutet und
- R: für Wasserstoff oder C₁-C₄-Alkyl oder C₆-C₁₀-Aryl, insbesondere für Wasserstoff steht.

Bevorzugte Dicarbonsäuren oder Disäurechloride entsprechen in Form der Dicarbonsäurechloride der Formel (V)

ClOC-D-COCl (V)

worin D die unter B angegebenen Bedeutungen hat, davon jedoch unabhängig ist.

Weitere mögliche Ausgangskomponenten für Polyamide sind beispielsweise in Vieweg Müller, Kunststoff-Handbuch, Bd. VI, Kap. 2, Carl-Hanser-Verlag München, 1966 beschrieben.

Besonders bevorzugte erfindungsgemäße Polymere sind solche, die durch Reaktion von Hexamethylendiamin mit Adipinsäuredichlorid in Gegenwart der Verbindung II oder III hergestellt werden.

Besonders bevorzugt werden die Diaminoverbindungen und die Dicarbonsäuren bzw. die Disäurechloride im Verhältnis von 0,9 bis 1,1 eingesetzt und die fluoreszierenden Verbindungen, insbesondere in Form eines monofunktionellen fluoreszierenden Farbstoffes eingesetzt, wobei als funktionelle Gruppe NH₂ bevorzugt ist. Die Menge an monofunktionellem Farbstoff wird vorzugsweise so gewählt, daß sie 0,5 bis 10 Mol-%, bezogen auf die Gesamtmenge an Comonomere, bevorzugt 1 bis 5 Mol-% beträgt.

Amide der Formel (VI) 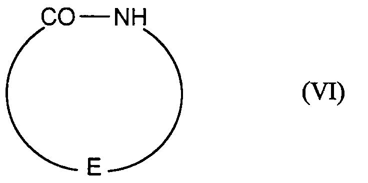 worin E (CH₂)ₙ mit n = 3 bis 20 bedeutet,
können mit der fluoreszierenden Verbindung, insbesondere einem monofunktionellen fluoreszierenden Farbstoff zu den erfindungsgemäßen Fluoreszenzmarkern aus der Gruppe der Polyamide umgesetzt werden.

Zur Herstellung der erfindungsgemäßen Fluoreszenzmarker aus der Gruppe der Polycarbonate setzt man vorzugsweise eine Carbonatverbindung der Formel 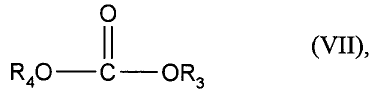 worin
- R₃ und R₄: unabhängig voneinander CH₃, C₂H₅, C₃H₇, C₄H₉ oder C₆H₅ bedeuten oder
- R₃ und R₄: gemeinsam den Rest einer gegebenenfalls substituierten aliphatischen Kohlenstoffkette bilden, insbesondere (CH₂)ₙ mit n = 3 bis 20 bedeuten,
mit einer Dihydroxyverbindung der Formel

HO-G-OH (VIII) um,

worin G die unter B angegebene Bedeutung annehmen kann, in Gegenwart der fluoreszierenden Verbindung, wobei die fluoreszierende Verbindung, insbesondere der fluoreszierende Farbstoff, 2 oder mehrere Hydroxygruppen oder 2 oder mehrere Carbonatgruppen tragen kann und somit als Kettenverlängerer bzw. - vernetzer fungiert oder nur eine Hydroxy- oder eine Carbonatgruppe trägt und somit als Kettenabbrecher ins Polymer eingebaut wird. Bevorzugt sind Di-C₁-C₄-alkyl- oder Di-C₆-C₁₀-arylcarbonate wie beispielsweise

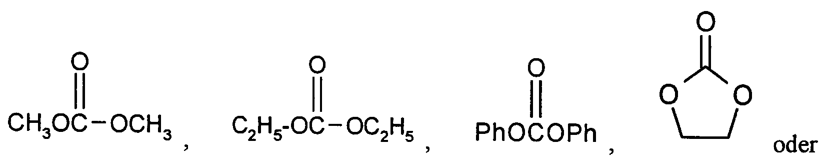

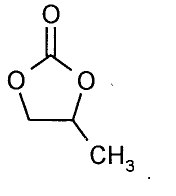

Ebenfalls bevorzugt sind C₁-C₄-Alkyldiole oder C₆-C₁₀-Diaryldiole wie beispielsweise 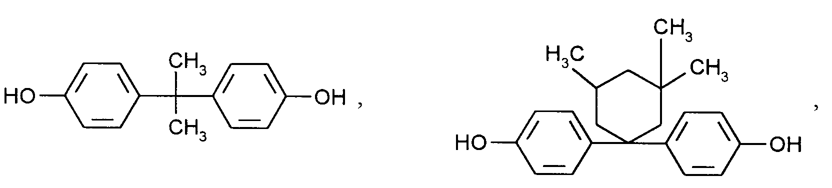 HOCH₂CH₂OH, HO(CH₂)₆OH,

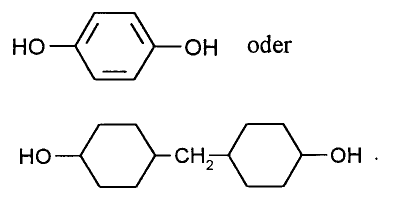

Weitere mögliche Ausgangskomponenten für Polycarbonate sind beispielsweise in Becker/Braun, Kunststoff Handbuch Bd. 9/1, Kap. 3, Carl-Hauser-Verlag München, Wien, 1992 beschrieben.

Besonders bevorzugt werden die Carbonate und die Diole im Mol Verhältnis von 0,9 bis 2 und die fluoreszierenden Verbindungen, vorzugsweise in Form eines monofunktionellen fluoreszierenden Farbstoffs, der als funktionelle Gruppe eine Hydroxygruppe trägt, in einer Menge von 1 bis 15 Mol-%, bezogen auf die Gesamtmenge an Comonomeren, eingesetzt.

### Polyester

Erfindungsgemäße polymere Fluoreszenzmarker aus der Gruppe der Polyester werden beispielsweise bevorzugt durch Reaktion einer aromatischen oder aliphatischen Dihydroxyverbindung mit einer aromatischen oder aliphatischen Dicarbonsäure oder ihrer Derivate, insbesondere Dicarbonsäuredichloride, in Gegenwart der fluoreszierenden Verbindung hergestellt, wobei die fluoreszierende Verbindung, insbesondere der fluoreszierende Farbstoff als funktionelle Gruppe, bevorzugt Hydroxy- oder Carboxy- oder derivatisierte Carboxygruppe, insbesondere Säurechloridgruppen trägt.

Die fluoreszierende Verbindung kann zwar auch mehrere, vorzugsweise jedoch nur eine der genannten funktionellen Gruppen tragen.

Bevorzugte Dihydroxyverbindungen sind solche der Formel (IX)

HO-G'-OH (IX),

worin G' die unter B angegebene Bedeutung annehmen kann,
insbesondere -CH₂CH₂- , -(CH₂)₄- , 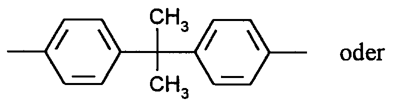 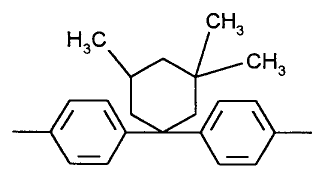 bedeutet.

Bevorzugte Dicarbonsäuren oder deren Derivate entsprechen der Formel (X)

MOC-D'-COM (X),

worin
- M: für OH, Cl, Alkoxy oder Aryloxy steht, und
- D': die unter B angegebene Bedeutung annehmen kann,
insbesondere -(CH₂)₆-, 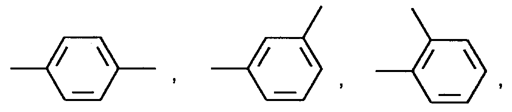 -(CH₂)₂-, -(CH₂)₄-, -(CH₂)₁₁- bedeutet.

Weitere Ausgangskomponenten für Polyester sind beispielsweise in Becker/Braun, Kunststoff Handbuch, Bd. 3/1, Kap. 2, Carl-Hanser-Verlag München, Wien, 1992 beschrieben.

Besonders bevorzugt werden die Dihydroxyverbindungen und die Dicarbonsäureverbindungen bzw. deren Derivate im Mol-Verhältnis von 0,9 bis 1,2 eingesetzt und die fluoreszierende Verbindung, insbesondere in Form eines monofunktionellen Farbstoffes eingesetzt, wobei als funktionelle Gruppe X, OH oder NH₂ bevorzugt ist. Die Menge an monofunktionellem Farbstoff wird vorzugsweise so gewählt, daß sie 1 bis 15 Mol-%, bezogen auf die gesamte Comonomeren-Menge, beträgt.

### Polyurethane

Erfindungsgemäße polymere Fluoreszenzmarker aus der Gruppe der Polyurethane werden beispielsweise bevorzugt durch Reaktion einer aliphatischen oder aromatischen Dihydroxyverbindung mit einer aromatischen oder aliphatischen Diisocyanatverbindung in Gegenwart der fluoreszierenden Verbindung hergestellt, wobei die fluoreszierende Verbindung, insbesondere der fluoreszierende Farbstoff, als funktionelle Gruppe eine oder mehrere Hydroxy- oder Isocyanatgruppen trägt. Vorzugsweise trägt die fluoreszierende Verbindung eine funktionelle Gruppe.

Bevorzugte Dihydroxyverbindungen entsprechen der Formel (IX)

HO-G'-OH (IX),

worin
- G': die obige Bedeutung hat.

Bevorzugte Diisocyanate entsprechen der Formel (XI)

OCN-K-NCO (XI),

worin
- K: die unter B angegebene Bedeutung annehmen kann.

Weitere geeignete Dihydroxy- und Diisocyanat-Verbindungen zur Herstellung von Polyurethanen sind z.B. in Becker/Braun, Kunststoff-Handbuch Bd. 7, Kap. 2 und 3, Carl-Hanser-Verlag München, Wien, 1993 beschrieben.

Besonders bevorzugt werden die Dihydroxyverbindungen der Formel (X) und die Diisocyanatverbindung im Mol-Verhältnis von 0,9 bis 1,1 eingesetzt und die fluoreszierende Verbindung, insbesondere in Form eines monofunktionellen Farbstoffs eingesetzt, wobei als funktionelle Gruppe X, OH oder NH₂ bevorzugt ist. Die Menge an monofunktionellem Farbstoff wird vorzugsweise so gewählt, daß sie 1 bis 15 Mol-%, bezogen auf die Gesamtmenge an Comonomeren, beträgt.

### Polyharnstoffe

Erfindungsgemäße polymere Fluoreszenzmarker aus der Gruppe der Polyharnstoffe werden beispielsweise bevorzugt durch Reaktion einer aliphatischen oder aromatischen Diaminverbindung mit einer aromatischen oder aliphatischen Diisocyanatverbindung in Gegenwart der fluoreszierenden Verbindung hergestellt, wobei die fluoreszierende Verbindung, insbesondere der fluoreszierende Farbstoff, als funktionelle Gruppe eine oder mehrere Hydroxy- oder Isocyanatgruppen oder Amingruppe trägt. Vorzugsweise trägt die fluoreszierende Verbindung eine funktionelle Gruppe.

Bevorzugte Diaminverbindungen entsprechen der Formel (IV)

HRN-B-NRH (IV),

mit den dafür angegebenen Bedeutungen für R und B.

Bevorzugte Diisocyanate entsprechen der Formel (XI)

OCN-K-NCO (XI),

worin
- K: die unter B angegebene Bedeutung annehmen kann.

Die Erfindung betrifft weiterhin Masterbatches, bestehend aus den oder enthaltend die erfindungsgemäßen polymeren Fluoreszenzmarker, vorzugsweise in einer Menge von 1 bis 50.000 ppm, insbesondere von 100 bis 1.000 ppm.

Die Erfindung betrifft weiterhin ein Verfahren zur Erkennbarmachung eines Kunststoffs, dadurch gekennzeichnet, daß man dem Kunststoff bei oder nach seiner Herstellung 0,01 bis 1.000 ppm des erfindungsgemäßen Polymers zusetzt. Als Kunststoffe kommen vorzugsweise Thermoplasten oder Duroplasten wie in Hansjürgen Saechtlings Taschenbuch, Kap. 4 und 5, Carl-Hanser-Verlag, München, Wien, 1992 beschrieben, in Frage.

Als Duroplaste sind beispielsweise Phenolharze, Epoxidharze und ungesättigte Polyesterharze zu nennen.

Als Thermoplaste sind z.B. Polycarbonate und Polyamide, Polyethylene, Polyacrylate und Polymethacrylate zu nennen.

Die Erfindung betrifft auch die Anwendung des erfindungsgemäßen Erkennungsverfahrens zur Trennung von Kunststoffen, insbesondere Kunststoffmüll. Die Anregung der in dem erfindungsgemäßen Polymer eingebauten fluoreszierenden Verbindungen, das in dem zu prüfenden Gegenstand enthalten ist, kann beispielsweise durch einen Laser erfolgen. Das dabei erzeugte gestreute Emissionslicht wird von einem Detektor aufgefangen und registriert. Dieses Signal wird zum Auslösen der Trennfunktion verwendet. Diese kann beispielsweise bei kleinen granulierten Teilchen die elektrostatische Aufladung und Ablenkung in einem elektrischen Feld, oder bei größeren Teilchen einfach eine mechanische Aussonderung sein.

Gegenstand der Erfindung ist somit auch ein Verfahren zum Sortieren von Kunststoffen, insbesondere von Kunststoffschrott oder von Kunststoffmüll, das dadurch gekennzeichnet ist, daß man die durch Zusatz von den erfindungsgemäßen Polymeren erkennbar gemachten Kunststoffe aufgrund der emittierten Fluoreszenzstrahlung nach Kunststoffsorten klassiert. Die erfindungsgemäßen Polymeren, d.h. Fluoreszenzmarker werden in Mengen von 0,01 bis 1.000 ppm, bezogen auf den zu markierenden Kunststoff eingesetzt. Der für die Markierung eingesetzte Fluoreszenzmarker (erfindungsgemäßes Polymer) wird vorzugsweise in einer Menge in den zu markierenden Kunststoff eingearbeitet, in der eine zweifelsfreie Erkennbarkeit durch den jeweiligen Detektor möglich ist. Die dabei erforderlichen Mengen sind in der Regel sehr klein und betragen vorzugsweise 0,01 bis 1.000 ppm, bezogen auf die Gesamtmenge des zu markierenden Kunststoffs, wobei die Fluoreszenzmarker vorzugsweise eine Fluoreszenzquantenausbeute von > 0,01, vorzugsweise > 0,05 aufweisen.

### Beispiele

### Beispiel 1 Polymerer Fluoreszenzmarker (Polyamid)

5,8 g Hexamethylendiamin (0,05 mol), 11,3 g Triethylamin (0,11 mol) und 0,7 g eines Farbstoffs der Formel (1) (0,0019 mol) wurden in 100 ml Chloroform vorgelegt. Unter schnellem Rühren wurden 9,15 g Adipinsäuredichlorid (0,05 mol) in 40 ml Chloroform innerhalb von 2 Minuten zugetropft. Dabei erwärmte sich die Reaktionsmischung auf 62°C. Es wurde unter Rühren auf Raumtemperatur abgekühlt und der entstandene Niederschlag abgesaugt. Letzterer wurde mit je dreimal 50 ml Chloroform, Petrolether, 1nHCl, H₂O und Aceton gewaschen. Der Rückstand wurde im Hochvakuum bei 50°C einen Tag getrocknet. Ausbeute 8 g, Fp.: 255 bis 258°C, Orange. Mittleres Molekulargewicht Mₙ = 1.500 g/mol.

### Beispiel 2 Polymerer Fluoreszenzmarker (Polycarbonat)

32,13 g Diphenylcarbonat (0,15 mol) und 22,8 g Bisphenol A (0,1 mol) wurden vorgelegt und im Wasserstrahlvakuum innerhalb von 1 Stunde auf 180°C erhitzt. Diese Temperatur wurde 3 Stunden gehalten und dann innerhalb von 2 Stunden auf 210°C erhöht. Es wurde mit N₂ belüftet und etwas abgekühlt. Dann wurden 1,25 g an Farbstoff der Formel (3) zugegeben, ein Wasserstrahlvakuum angelegt und innerhalb von 2 Stunden auf 240°C erhitzt. Dabei wurde Phenol und Diphenylcarbonat abgespalten (32,7 g), Ausbeute: 23,1 g eines gelben Produktes, Fp.: 230°C. Mittleres Molekulargewicht Mₙ = 3.000 g/mol.

### Beispiel 3 Polymerer Fluoreszenzmarker (Polyester)

3,1 g Ethylenglykol (0,05 mol), 11,3 g Triethylamin (0,11 mol) und 0,69 g eines Farbstoffs der Formel (6) (0,0019 mol) wurden in 100 ml Chloroform vorgelegt. Unter schnellem Rühren wurden dazu 10,15 g Terephthalsäuredichlorid (0,05 mol) in 40 ml Chloroform innerhalb von 2 Minuten zugetropft. Die Aufarbeitung erfolgte wie in Beispiel 1. Die Ausbeute beträgt 10 g. Fp.: 255°C, Farbe des Produktes: rot. Mittleres Molekulargewicht Mₙ = 2.000 g/mol.

### Beispiel 4 Polymerer Fluoreszenzmarker (Polyurethan)

Zu 45 g Butandiol (0,5 mol) und 6,46 g eines Farbstoffs der Formel (8) (0,02 mol) tropfte man 83,16 g Hexamethylendiisocyanat (0,495 mol) bei einer von 50 auf 190°C steigenden Temperaturen zu. Das harte, zähe Polyaddukt wurde gemahlen. Ausbeute: 120 g, Fp.: 180°C, Farbe des Produktes: beige. Mittleres Molekulargewicht Mₙ = 2.500 g/mol.

### Beispiel 5 Polymerer Fluoreszenzmarker (Polyharnstoff)

Zu 19 g Decamethylendiamin (0,11 mol) in 39 ml Kresol und 1,01 g Farbstoff der Formel (17) (0,04 mol) wurden innerhalb von 10 Minuten 24,8 g Decamethylendiisocyanat zugetropft. Dabei zeigte sich eine starke Wärmeentwicklung. Die Reaktionsmischung wurde 5 Stunden auf 218°C gehalten und dann mit 1,5 l Methanol ausgefällt. Das Produkt wurde mit Ethanol gewaschen und 15 Stunden bei 60°C im Wasserstrahlvakuum getrocknet. Ausbeute: 30 g, Fp.: 200°C, Farbe des Produktes: beige. Mittleres Molekulargewicht Mₙ = 2.900 g/mol.

Die nachfolgende Liste enthält weitere erfindungsgemäße Fluoreszenzmarker, die analog den Angaben des Beispiels 1 oder Beispiel 2 hergestellt wurden.

Die so hergestellten Fluoreszenzmarker sind in gebräuchlichen Lösungsmitteln wie CH₂Cl₂, CHCl₃, Aceton oder Alkohol unlöslich.

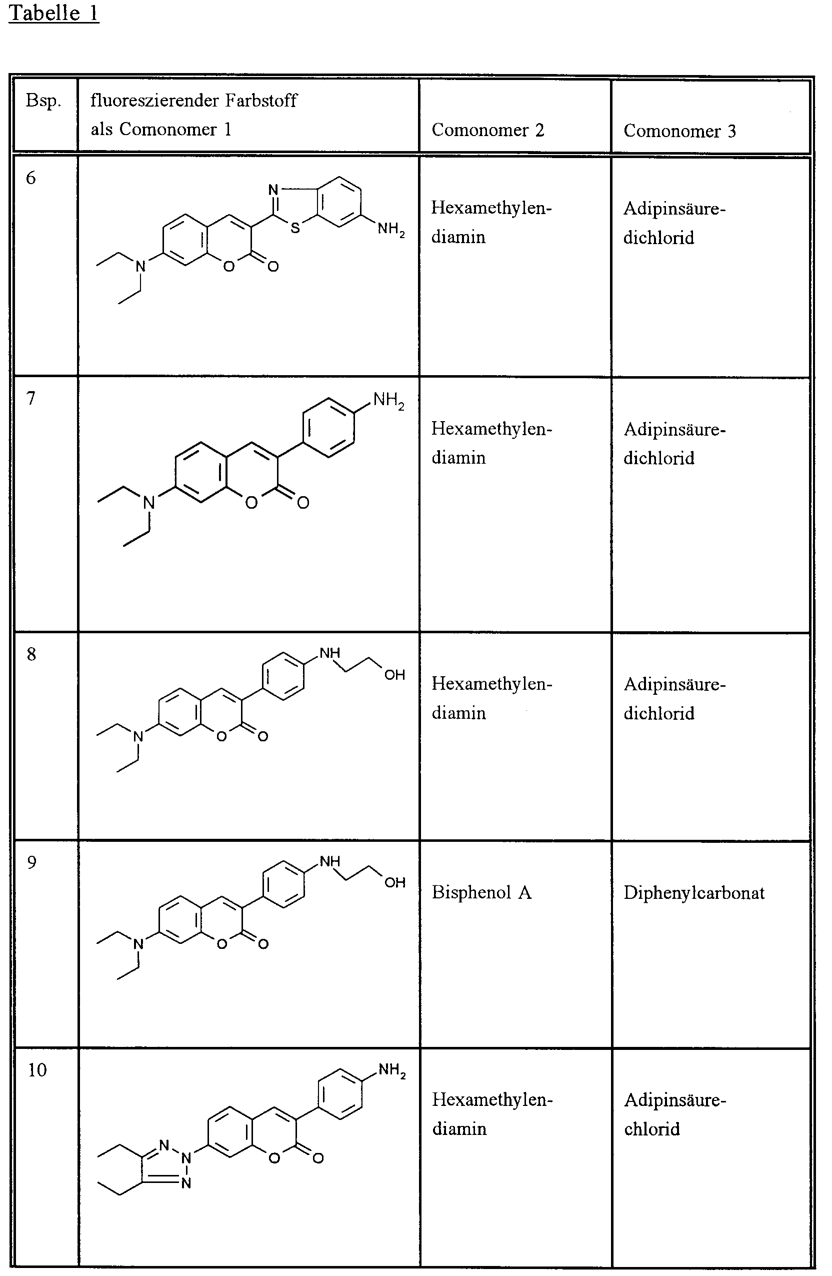

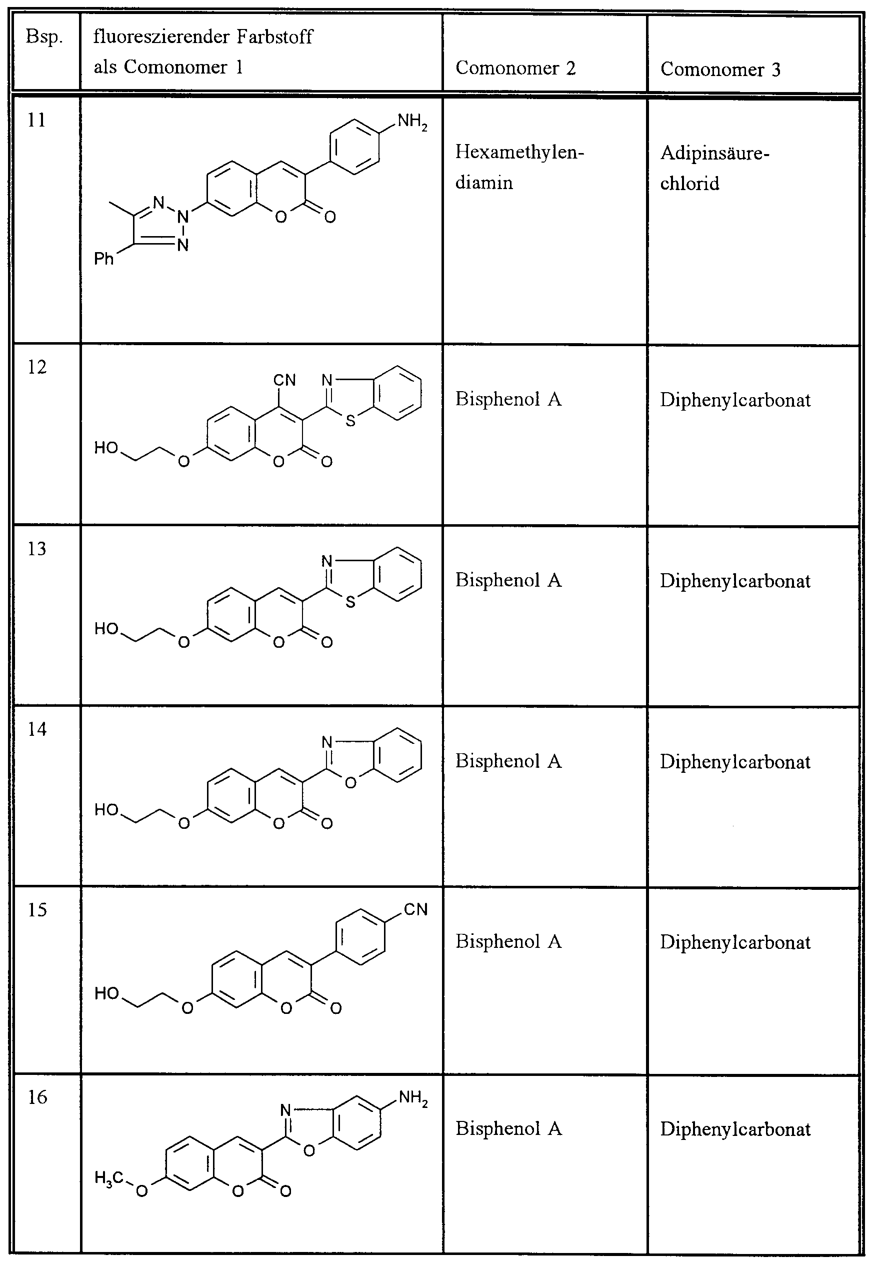

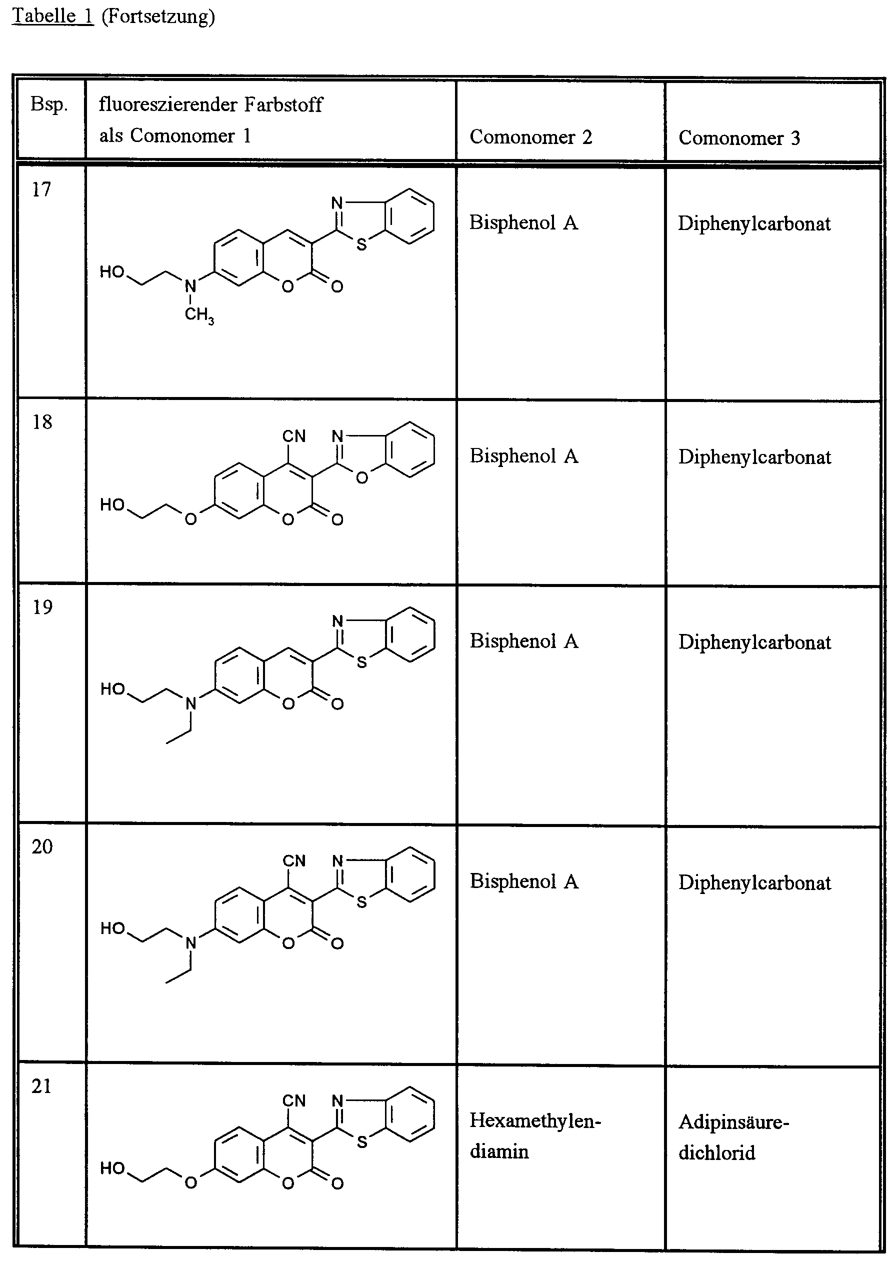

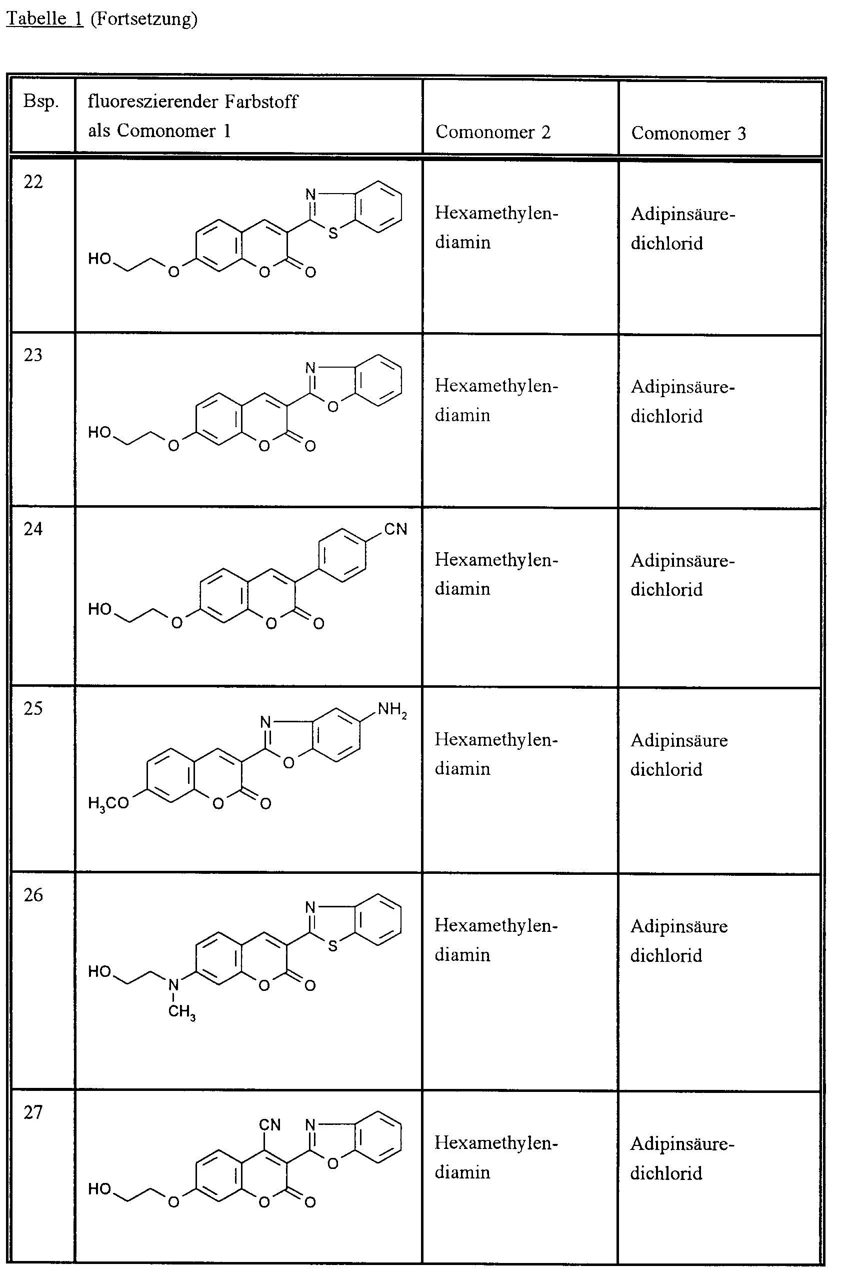

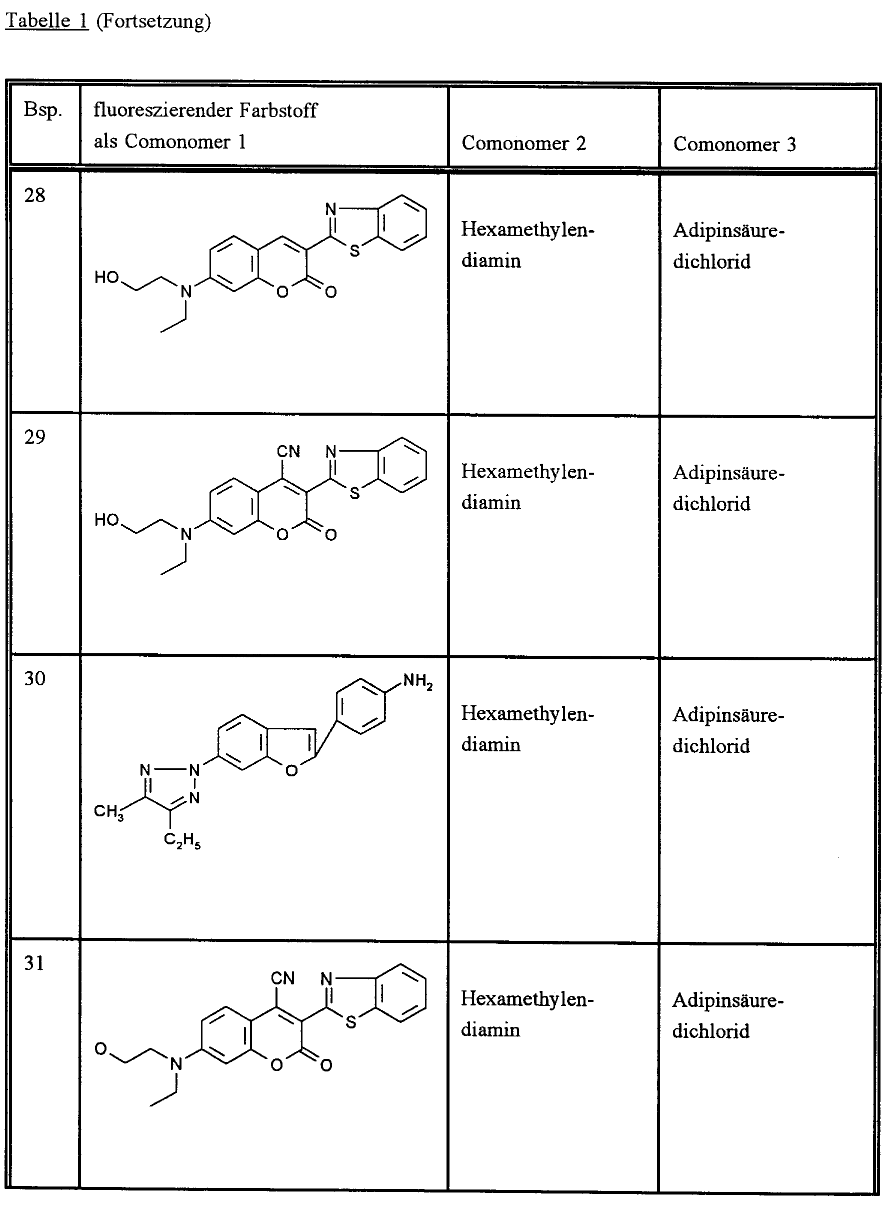

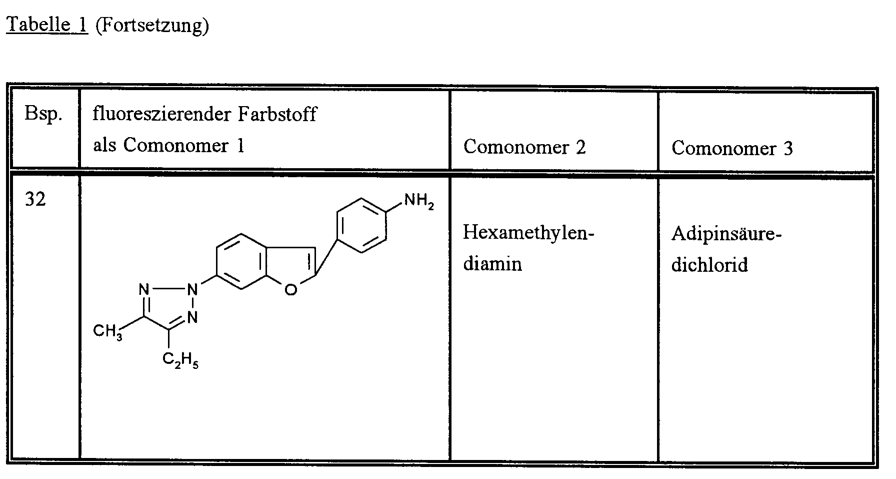

### Verwendungsbeispiele

### Masterbatch 1:

2998,5 g eines Polyamid 6-Granulats (Erweichungstemperatur 180°C) wurden bei 80°C im Wasserstrahlvakuum getrocknet. 1,5 g des Fluoreszenzmarkers aus Beispiel 8 wurden als Dispersion in Isopropanol auf das Kunststoffgranulat aufgetrudelt und das Lösungsmittel unter Wasserstrahlvakuum abgedampft. Das Granulat wurde im Extruder bei 240°C in das entsprechende Masterbatch mit einem Anteil von 500 ppm Fluoreszenzmarker überführt.

### Verwendung 1:

Das Masterbatch 1 wurde mit Polyamid 6 im Verhältnis 1:2 gemischt und zu Formkörpern extrudiert. Der Anteil an Fluoreszenzmarker aus Beispiel 8 im Polyamid betrug 50 ppm.

### Masterbatch 2:

2998,5 g eines Polycarbonats ηᵣₑₗ = 1,28; Mw = 28000 g/mol (aus Bisphenol A und Phosgen) wurden bei 80°C im Wasserstrahlvakuum getrocknet. 1,5 g an Fluoreszenzmarker aus Beispiel 17 wurden wie unter Masterbatch 1 beschrieben in das Polycarbonat eingearbeitet und bei 280°C in das entsprechende Masterbatch 2 mit einem Gehalt von 500 ppm an den Fluoreszenzmarker aus Beispiel 17 überführt.

### Verwendung 2:

Das Masterbatch 2 wurde mit dem oben beschriebenen Polycarbonat im Verhältnis 1:10 gemischt und zu Formkörpern extrudiert. Der Anteil an Fluoreszenzmarker aus Beispiel 17 im markierten Polycarbonat ergab sich zu 50 ppm.

### Masterbatch 3:

2998,5 g eines Low Density Polyethylens (Dichte = 0,92 g/cm³) wurden mit 1,5 g des Fluoreszenzmarkers aus Beispiel 8 als Dispersion in Isopropanol auf das Kunststoffgranulat aufgetrudelt und das Lösungsmittel unter Wasserstrahlvakuum abgedampft. Die beschichteten Granulatkörner besitzen eine Konzentration von 500 ppm Oligomerfarbstoff.

### Verwendung 3:

Masterbatch 3 wurde mit Low Density Polyethylen im Verhältnis 1:10 gemischt und zu Formkörpern bei 200°C extrudiert. Die Konzentration an Fluoreszenzmarker aus Beispiel 8 betrug 50 ppm.

### Masterbatch 4:

2998,5 g eines Polymethylmethacrylats (Dichte: 1,19 g/cm³) wurden bei 80°C im Wasserstrahlvakuum getrocknet. 1,5 g des Fluoreszenzmarkers aus Beispiel 17 wurde als Dispersion in Isopropanol auf das Kunststoffgranulat aufgetrudelt und das Lösungsmittel unter Wasserstrahlvakuum abgedampft. Die beschichteten Granulatkörner besitzen eine Konzentration von 500 ppm des Fluoreszenzmarkers.

### Verwendung 4:

Masterbatch 4 wurde mit dem Polymethylmethacrylat aus Masterbatch 4 im Verhältnis 1:10 gemischt und zu Formkörpern bei 240°C extrudiert. Die Konzentration des Fluoreszenzmarkers betrug 50 ppm.

### Masterbatch 5:

2998,5 g eines Polyethylenterephthalat (aus Ethylenglykol und Terephthalsäure, Dichte = 1,33 g/cm³) wurden bei 110°C im Wasserstrahlvakuum getrocknet. 1,5 g Fluoreszenzmarker (aus Beispiel 18) wurden als Dispersion in Isopropanol auf das Kunststoffgranulat aufgetrudelt und das Lösungsmittel im Wasserstrahlvakuum abgedampft. Das Granulat wurde bei 280°C kompoundiert und in das Masterbatch mit einem Anteil von 500 ppm Fluoreszenzmarker überführt.

### Verwendung 5:

Masterbatch 5 wurde im Verhältnis 1:10 mit Polyethylenterephthalat (Dichte = 1,33 g/cm³) gemischt und zu Formkörpern bei 280°C extrudiert. Die Konzentration an Fluoreszenzmarker betrug 50 ppm.

### Masterbatch 6:

2998,5 g eines Polyvinylchlorids (Dichte = 1,37 g/cm³) wurden mit 1,5 g Fluoreszenzmarker aus Beispiel 26 als Dispersion in Isopropanol auf das Kunststoffgranulat aufgetrindelt und das Lösungsmittel im Wasserstrahlvakuum abgedampft. Die beschichteten Granulatkörner besitzen eine Konzentration von 500 ppm Fluoreszenzmarker.

### Verwendung 6:

Masterbatch 6 wurde mit Polyvinylchlorid (Dichte = 1,37 g/cm³) im Verhältnis 1:10 gemischt und zu Formkörpern bei 200°C extrudiert. Die Konzentration an Fluoreszenzmarker betrug 50 ppm.

### Fluoreszenzuntersuchungen:

Die erfindungsgemäßen oligomeren Farbstoffe können zur Markierung von Kunststoffen benutzt werden. Dabei ist es möglich durch Kombination von verschiedenen Farbstoffen ein Erkennungsmuster zu erzeugen, das durch unterschiedliche Fluoreszenzeigenschaften identifiziert wird.

Die Fluoreszenzmessungen wurden mit einem Edinburgh FL/FS-900-Spektrometer durchgeführt.

| Formkörper aus Verwendung | Anregung in nm | Emission in nm |
|---|---|---|
| 1 | 411 | 465 |
| 2 | 374 | 417 |
| 3 | 398 | 454 |
| 4 | 370 | 412 |

## Patentansprüche

1. Durch Polykondensation oder Polyaddition erhältliche Polymere, die als ein Comonomer eine im sichtbaren Spektralbereich bei Wellenlängen von 400 bis 660 nm fluoreszierende Verbindung enthalten.

2. Polymere gemäß Anspruch 1, dadurch gekennzeichnet, daß die fluoreszierende Verbindung einem fluoreszierenden Farbstoff der Formel
Fb-(X)ₙ (I),
entspricht, worin
Fb ein fluoreszierender Farbstoffrest bedeutet,
X ein zur Kondensation oder Addition fähiger funktioneller Rest bedeutet, ausgewählt aus der Gruppe: -NH₂, -NHR₁, NCO, COCl, -COOH, -OH, -OCOR², -OCO₂R², -OCONNHR² oder CO₂R², worin R¹ und R² unabhängig voneinander gegebenenfalls substituiertes C₁-C₈-Alkyl, C₄-C₈-Cycloalkyl oder C₆-C₁₀-Aryl bedeuten, insbesondere unsubstituiertes Alkyl oder Phenyl, besonders bevorzugt C₁-C₄-Alkyl, wie Methyl oder Ethyl bedeuten und
n für eine Zahl von 1 bis 6 steht, wobei X gleich oder verschieden sein kann, wenn n größer als 1 ist und
das Emissionsmaximum des fluoreszierenden Farbstoffs der Formel (I) bei 400 bis 660 nm, vorzugsweise bei 400 bis 550 nm liegt.

3. Polymere gemäß Anspruch 2, dadurch gekennzeichnet, daß n für 1 oder 2, insbesondere für 1 steht.

4. Polymere gemäß Anspruch 1, dadurch gekennzeichnet, daß als fluoreszierende Verbindungen ein fluoreszierender Farbstoff aus der Gruppe der Cumarine, Benzofurane, Perylene, Benzanthrone, Anthrapyrimidine oder Anthrapyridone verwendet wird.

5. Polymere gemäß Anspruch 1, dadurch gekennzeichnet, daß als fluoreszierende Verbindung ein fluoreszierender Cumarinfarbstoff der Formel (II) 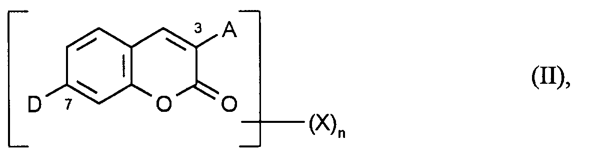 eingesetzt wird, worin
X und n die in Anspruch 1 angegebene Bedeutung besitzen und
A = für einen gegebenenfalls durch X substituierten aromatischen Rest, insbesondere C₆-C₁₀-Aryl-Rest, oder heterocyclischen Rest steht und
D = für einen gegebenenfalls durch X substituiertes Dialkylamino, N-substituierten Heterocyclus oder Alkoxy steht.

6. Polymere gemäß Anspruch 1, dadurch gekennzeichnet, daß als fluoreszierende Verbindung ein Benzofuranfarbstoff der Formel (III) 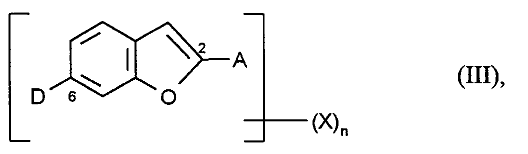 eingesetzt wird, worin
X und n die in Anspruch 1 angegebene Bedeutung besitzen und
A für einen gegebenenfalls durch X substituierten aromatischen Rest, insbesondere C₆-C₁₀-Aryl-Rest, oder heterocyclischen Rest steht und
D für ein gegebenenfalls substituiertes Dialkylamino, N-substituierten Heterocyclus oder Alkoxy steht.

7. Polymere gemäß Anspruch 1, dadurch gekennzeichnet, daß sie aus der Gruppe der Polyamide, Polyester, Polycarbonate, Polyurethane oder Polyharnstoffe sind.

8. Polymere gemäß Anspruch 1, dadurch gekennzeichnet, daß sie ein als Zahlenmittel bestimmtes mittleres Molgewicht von Mₙ 500 bis 5000 g/mol besitzen.

9. Masterbatches, bestehend aus dem oder enthaltend das Polymer nach Anspruch 1.

10. Verfahren zur Erkennbarmachung eines Kunststoffs, dadurch gekennzeichnet, daß man dem Kunststoff bei oder nach seiner Herstellung 0,01 bis 1000 ppm des Polymers nach Anspruch 1 zusetzt.

11. Verfahren zum Sortieren von Kunststoffen, insbesondere von Kunststoffschrott oder von Kunststoffmüll, dadurch gekennzeichnet, daß man die durch Zusatz eines Polymeren nach Anspruch 1 erkennbar gemachten Kunststoffe aufgrund der emittierten Fluoreszenzstrahlung nach Kunststoffsorten klassiert.
